Europäisches Patentamt

European Patent Office

Office européen des brevets

(11) Veröffentlichungsnummer: **0 157 310**
**B1**

(12) **EUROPÄISCHE PATENTSCHRIFT**

(45) Veröffentlichungstag der Patentschrift:
31.01.90

(51) Int. Cl.⁴: **G 01 N 21/53**

(21) Anmeldenummer: 85103385.2

(22) Anmeldetag: 22.03.85

(54) Laseroptische Anordnung zur Messung des Dispergiergrades in strömenden Systemen.

(30) Priorität: 04.04.84 DE 3412620

(43) Veröffentlichungstag der Anmeldung:
09.10.85 Patentblatt 85/41

(45) Bekanntmachung des Hinweises auf die Patenterteilung:
31.01.90 Patentblatt 90/5

(84) Benannte Vertragsstaaten:
AT BE CH DE FR GB IT LI NL SE

(56) Entgegenhaltungen:
EP-A- 0 108 605
DE-A- 2 943 116
DE-A- 3 143 825
DE-A- 3 243 719
DE-B- 1 598 188
FR-A- 2 447 548

(73) Patentinhaber: BASF Aktiengesellschaft,
Carl-Bosch-Strasse 38, D-6700 Ludwigshafen (DE)

(72) Erfinder: Eisenlauer, Josef, Dr., Neuwiesenstrasse 28,
D-6700 Ludwigshafen (DE)
Erfinder: Horn, Dieter, Dr., Schroederstrasse 69,
D-6900 Heidelberg (DE)
Erfinder: Ditter, Walter, Feuerbachstrasse 7,
D-6900 Heidelberg (DE)
Erfinder: Eipel, Heinz, Im Eichenboehl 24,
D-6140 Bensheim 3 (DE)

## Beschreibung

Die vorliegende Erfindung betrifft eine laseroptische Anordnung für eine schnelle in situ Messung des Dispergiergrades in strömenden Zweiphasensystemen, insbesondere für die Ermittlung einer optimalen Dosierung von Dispergier- bzw. Flockungshilfsmitteln in höherkonzentrierten, praxisgerechten Dispersionen gemäß Oberbegriff des Patentanspruchs 1.

Eine schnelle in situ Messung des Dispergiergrades in strömenden Systemen kann zu zwei unterschiedlichen Anwendungszwecken genutzt werden. Zum einen ist die Verfolgung des Dispergierfortschrittes in verfahrenstechnischen Zerkleinerungsapparaten möglich. Hier kann der Einfluß von Apparateparametern und Dispergierhilfsmitteln untersucht werden. Als Beispiel sei nur die Naßzerkleinerung unter Zusatz von Dispergierhilfsmitteln genannt. Zum anderen wird die laseroptische Methode zur Messung der gezielten Destabilisierung von Systemen durch den Zusatz von Fockungshilfsmitteln eingesetzt. Die laseroptische Methode ermöglicht es, beide Messungen in situ durchzuführen, so daß sehr schnell Veränderungen des Dispergiergrades aufgrund von gezielter Hilfsmitteldosierung detektiert werden können. Hinzu kommt, daß der Dispergiergrad unter der spezifischen Scherbeanspruchung des strömenden Systems gemessen werden kann.

Diese Eigenschaften lassen die laseroptische Methode sowohl zum Einsatz in Labortests für die Beurteilung der Wirkungsweise von Dispergier- bzw. Flockungshilfsmitteln als auch für die on line-Kontrolle und Regelung bzw. Steuerung von Dispergier- bzw. Flockungsanlagen geeignet erscheinen.

Die laseroptische Mehode beruht auf der Erfassung und Auswertung von zeitlich fluktuierenden Streulicht-, Abschattungs- oder Reflexionssignalen von strömenden Partikeln und/oder Partikelverbänden. Eine mögliche technische Realisierung in Form von sog. Streulichtzählern ist bekannt und in der Literatur beschrieben (Colloid & Polymer Sci. 258 (1980), 1303).

Hierbei ist der apparative Aufbau dadurch gekennzeichnet, daß die Messung in einer Durchflußküvette nicht an einem Teilchenensemble wie bei einer einfachen Trübungsmessung, sondern an Einzelteilen erfolgt. Dies kann entweder durch die Fokussierung des Laserlichts auf einen Strahldurchmesser im Größenbereich der zu messenden Partikeln (Colloid & Polymer Sci. 258 (1980), 1303) oder durch eine Vereinzelung der Partikeln in einer Kapillarströmung erfolgen (Colloid & Interface Sci. 17 (1962), 605). Letztere Methode hat den Nachteil, daß beim Durchströmen der Kapillaren extreme Scherbeanspruchungen auftreten können, die aufgrund der begrenzten Scherbeständigkeit von Partikelverbänden zu einem nichtrepräsentativen Dispergiergrad führen können; darüberhinaus verhindert die hohe Störanfälligkeit aufgrund von Verstopfungen den Einsatz in praktischen Systemen (Klärschlamm, Abwasser etc.).

Die Zuordnung der mit einem Photodetektor registrierten pulsartigen Detektorsignale zu einer Partikelgrößenverteilung geschieht in der Regel mit Mehrkanalanalysatoren, die eine Pulszählung und Klassierung nach Pulshöhen vornehmen (Pulshöhenanalyse). Die Pulshöhenanalyse ist jedoch auf relativ verdünnte Systeme beschränkt, wo das Meßsignal aus isolierten Einzelpulsen ohne Koinzidenzen besteht. In praktischen Systemen hat man aufgrund der höheren Konzentration und der Anwesenheit von Partikelverbänden meist überlappende und strukturierte Pulsfolgen, auf einem hohen Gleichspannungsuntergrund sitzend, für die eine Auswertung nach dem Prinzip der Pulshöhenanalyse versagt. Für derartige Systeme wurde in der Literatur eine modifizierte Analysenmethode (Schnittmengenanalyse) vorgeschlagen, die eine sehr sensitive Detektion der optimalen Dosierung von Flockungs- bzw. Dispergierhilfsmitteln in praxisgerechten Dispersionen ermöglicht und auch Aussagen über Struktur und Größe von Partikelverbänden liefert (in «The Effect of Polymers on Dispersion Properties», S.324 bis 342, Academic Press, London 1982). Diese differentiellen Messungen an Einzelteilchen sprechen wesentlich empfindlicher auf Änderungen des Dispergiergrades an als eine integrale Trübungsmessung, wie sie in der Literatur für die Regelung von Flockungsanlagen beschrieben wird (GWF-Wasser/Abwasser 121,6 (1980), 277 und 123,3 (1982), 131).

Eine wesentlich Vereinfachung der Analyse ist durch eine simple Bestimmung des Effektivwertes der pulsartigen Detektorsignale möglich (Wochenblatt für Papierfabrikation 13 (1972) 494 und Advances in Solid-Liquid Separation, S. 172-182, Gregory J. (Ed.), Academic Press, London 1984). Die enge Korrelation zwischen Effektivwert und Dispergiergrad ermöglicht zumindest eine empfindliche Detektion der optimalen Dosierung von Dispergier-/Flockungshilfsmitteln; darüberhinaus sind auch Informationen über Grösse und Struktur der Partikel und/oder Partikelverbände enthalten.

Die bisherigen technischen Realisierungen der optischen Methoden zur Messung des Dispergiergrades in strömenden Systemen sind dadurch gekennzeichnet, daß sie, wie bei der Einzelteilchenmessung auf verdünnte Systeme beschränkt sind und mit aufwediger Optik und Elektronik erfolgen. Praxisrelevante Versionen für höherkonzentrierte Systeme mit vergleichsweiser einfacher Auswerteelektronik sind nur durch den Einsatz von komplizierten optischen Aufbauten und/oder von dünnen Kapillaren als Durchflußküvette bei entsprechender Verstopfungsgefahr realisierbar. Besonders nachteilig wirken sich bei allen Versionen Ablagerungen an den Fenstern der Durchflußküvetten aus. Dies gilt in hohem Maße beim Einsatz von polymeren Flockungshilfsmitteln (z.B. Abwasserklärung oder Schlammentwässerung), wo klebrige Flocken innerhalb kürzester Zeit die Durchflußküvetten mechanisch und/oder optisch blockieren können. Besonders störanfällig in dieser Hinsicht ist bekanntlich die Trübungsmessung, die aufgrund der wesentlich schlechteren Auflösung im Vergleich zu den differentiellen Methoden als zuverlässige Praxislösung ohnehin ausscheidet.

In der DE-A-2 943 116 ist eine Einrichtung zur durchflußcytometrischen Reaktions- und/oder Diffusionsmessung von in einer Flüssigkeit suspendierten Teilchen beschrieben, bei der die zu einem Suspensionsfaden fokussierte Suspension zusammen mit mehreren Mantelflüssigkeiten mittels eines sich verjüngenden Rohres in ein weiteres Rohr eingeleitet und dort von einem Laserstrahl durchkreuzt wird. Die von den vereinzelten Teilchen der Suspension reflektierte Strahlung gelangt über optische Einrichtungen auf einen Detektor, der an eine Impulsauswerterschaltung angeschlossen ist.

Wie bei den oben erläuterten Meßmethoden erfolgt auch hier eine Einzelteilchenanalyse mit Hilfe einer aufwendigen und komplizierten optischen Einrichtung, wobei die tatsächliche Partikelgrössenverteilung durch das hydrodynamische Fokussieren der Suspension verändert wird. Das erhaltene Meßergebnis stellt daher keinen repräsentativen Dispergiergrad dar.

Vorliegender Erfindung liegt die Aufgabe zugrunde, eine laseroptische Anordnung zu entwickeln, die eine en situ Messung des Dispergiergrades eines strömenden Zweiphasensystems auch bei räumlich begrenzten Einsatzgegebenheiten erlaubt, um gegenüber den bekannten Meßeinrichtungen den Kreis der Einsatzmöglichkeiten zu erweitern.

Die Aufgabe wurde gelöst durch eine laseroptische Anordnung, wie in Anspruch 1 definiert.

Der Aufbau der laseroptischen Methode zur Messung des Dispergiergrades in strömenden Systemen wird erfindungsgemäß weiter verbessert, indem der Photodetektor in einer Klemmschaltung betrieben wird, die einen Gleichspannungs/Strombezugswert liefert, auf den die Fluktuationen normiert werden; ferner indem als Laser ein integrierter Halbleiterlaser verwendet wird und das Laserlicht direkt über einen Lichtleiter in die Durchflußküvette geleitet wird; ferner indem als Photodetektor ein integrierter Detektor, z.B. eine Silizium-Avalanche-Photodiode verwendet wird, und die Signale vom Meßort direkt mit einem Lichtleiter zum Photodetektor geleitet werden; ferner indem der optische und elektronische Aufbau voll zu einem Meßsytem integriert ist.

Die Erfindung basiert auf der Kombination der drei an sich bekannten Einzelelemente Hüllstromküvette, Lichtleitfaser und Effektivwertmessung von pulsierenden Meßsignalen. Das bloße Zusammenfügen dieser drei Elemente führt jedoch nicht zum erwünschten Ziel. Erst die Verwendung von speziellen Lichtleitfasern mit parallel oder fokusiert austretenden Lichtbündeln mit Abmessungen im Größenbereich der Partikel und/oder Partikelverbände beseitigt in Kombination mit der Hüllstromanordnung und der Zuordnung Effektivwert-Dispergiergrad weitgehend die beschriebenen Nachteile der bisher bekannten Meßanordnung.

Die mit der Erfindung erzielten Vorteile bestehen indbesondere darin, daß eine robuste, einfache und preisgünstige Anordnung mit erhöhter Auflösung und Betriebssicherheit für den Praxisbetrieb bereitgestellt wird. Im einzelnen entfallen komplizierte optische Aufbauten und Justierarbeiten; die Beschränkung auf dünne Kapillaren mit entsprechender Störanfälligkeit durch Verstopfung ist nicht mehr erforderlich. Durch die Hüllstromanordnung ist zudem eine hohe Betriebssicherheit in Form von hoher Meßgenauigkeit und langen Standzeiten gewährleistet. Bei gleichem Informationsgehalt wird die aufwendige Elektronik der Pulshöhen- oder Schnittmengenanalyse auf ein einfaches Effektivwertmeßgerät oder sogar auf einen Microchip reduziert.

Dadurch ist die Möglichkeit gegeben, den Dispergiergrad in praxisgerechten Systemen ohne vorherige Verdünnung innerhalb von Meßzeiten ≤5 Sekunden signifikant zu erfassen und gegebenenfalls zur Regelung bzw. Steuerung von Dispergier-/Flockungsanlagen zu verwenden; viele neue Einsatzgebiete in Forschung und Praxis werden erstmals zugänglich.

Vier Ausführungsbeispiele der Erfindung sind im folgenden dargestellt und werden näher beschrieben.

Es zeigen

Figur 1 eine typische Ausführungsform einer voll integrierten laseroptischen Anordnung zur Beurteilung des Dispergiergrades in strömenden Systemen

Figur 2 die laseroptische Anordnung nach Figur 1 integriert in eine rechnergesteuerte Anlage für den Test der Wirksamkeit von Dispergier/Flokungshilfsmitteln

Figur 3 den relativen Flockungsgrad einer anionischen Latexdispersion als Funktion der Konzentration eines kationischen Flockungshilfsmittels, ermittelt aus der Schnittmengenanalyse (·−·) und der Effektivwertmessung (□) der Detektorfluktuationen nach Figur 1

Figur 4 den relativen Flockungsgrad einer Tonsuspension als Funktion der Konzentration eines kationischen Flockungshilfsmittels ermittelt aus der Schnittmengenanalyse (·−·) und der Effektivwertmessung (□) der Detektorfluktuationen nach Figur 1.

Die Dispersion 1 wird über einen axial verstellbaren Einführstutzen 2 in eine Hüllstromküvette 3 geleitet, mit einem Hüllstrom 4 umgeben und an einem Meßort 5 vorbeigeführt. Die Senderseite besteht aus einem Halbleiterlaser 6, einer einzelnen Lichtleitfaser 7 mit einer Linsenanordnung 18 für einen parallelen Austritt der Laserlichts mit einem Durchmesser des Lichtbündels von 50 μm; auf der Empfängerseite werden die pulsartigen Schwankungen des durchgehenden Lichtes über ein Lichtleitfaserbündel 8 einem Detektor 9 mit integrierter Effektivwertmessung 10 zugeführt.

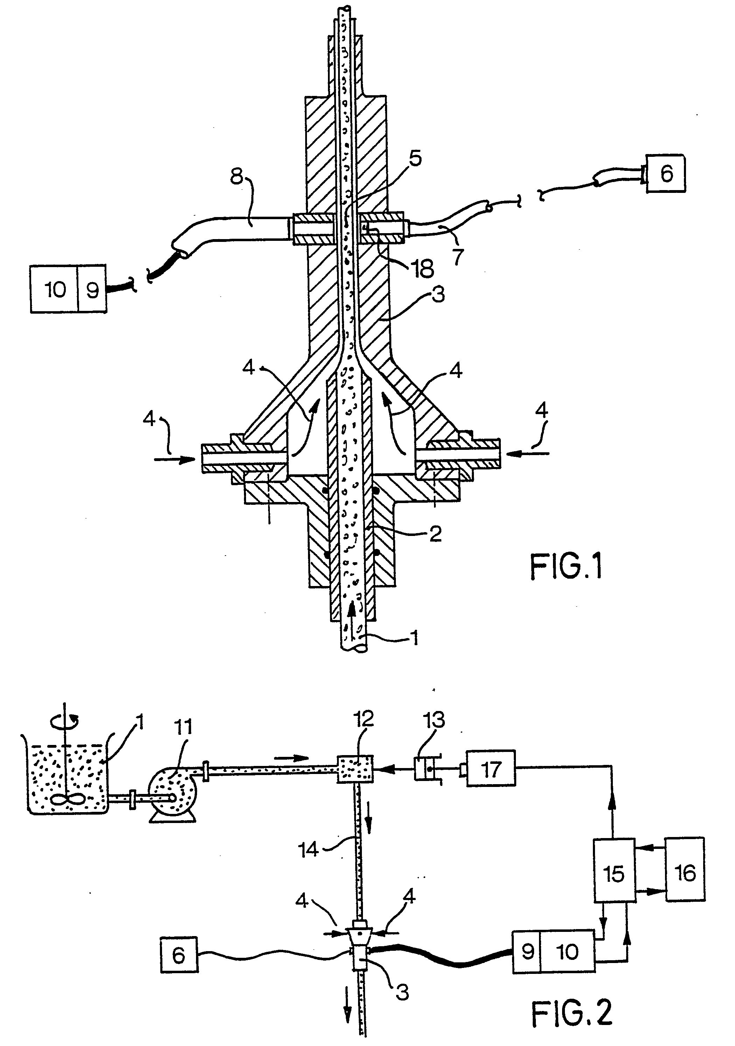

In Fig. 2 ist die laseroptische Anordnung 1–10 in eine rechnergesteuerte Anlage zum Testen von Fockungshilfsmitteln integriert.

Die zu flockende Dispersion 1 wird über eine Pumpe 11 in einem Mischelement 12 mit dem Flockungshilfsmittel 13 vermischt, was bei entsprechender Dosierung zu einer Entstabilisierung der Dispersion führt. Die Flockenformierung findet in einer Rohrströmung statt. Nach einer variablen Laufstrecke 14 erfolgt die Bestimmung des Dispergiergrades in einer Durchflußküvette 3 mittels der erfindungsgemässen laseroptischen Anordnung nach Figur 1.

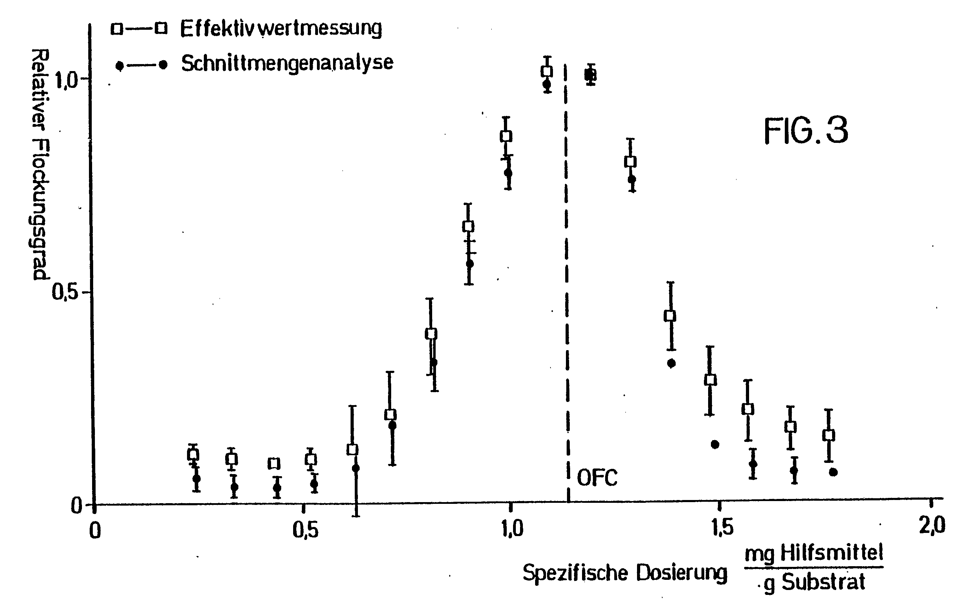

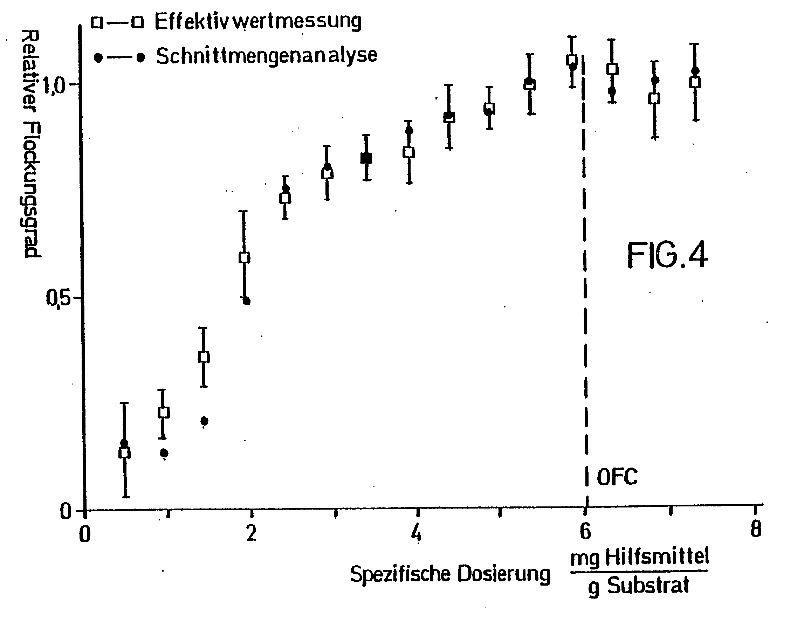

Die Hilfsmitteldosierung 17 und Effektivwertmessung 10 sind über eine Systemsteuerung 15 in Verbindung mit einem Kleinrechner 16 miteinander gekoppelt. Zur Bestimmung der optimalen Hilfsmitteldosierung kann die Dosierung 13, 17 stufenweise hochgefahren werden, während simultan der Dispergiergrad mit der erfindungsgemäßen Anordnung nach Figur 1 ermittelt wird. Man erhält dann Ergebnisse, wie sie typischerweise in den Figuren 3 und 4 in einer normierten Form – relativer Flockungsgrad (identisch mit eins minus relativer Dispergiergrad) über der spezifischen Hilfsmitteldosierung in mg Hilfsmittel pro Gramm Substrat – mit den entsprechenden Fehlerbreiten dargestellt sind. Für die Normierung wurde jeweils der Maximalwert des Flockungsgrades verwendet. Zum Vergleich wurde die Ermittlung des Dispergiergrades auch mit der in der Literatur beschriebenen Schnittmengenanalyse (in «The Effect of Polymers on Dispersion Properties», S. 324–342, Academic Press, London 1982) durchgeführt und die Ergebnisse zusammen mit der erfindungsgemäßen Bestimmung in die Figuren 3 und 4 in Form des relativen Fockungsgrades eingetragen.

Der Vergleich zeigt, daß beide Bestimmungsmethoden, zumindest was die Ermittlung der optimalen Dosierung in Form der eingezeichneten Werte OFC (optimale Flockungskonzentration) anbetrifft, den gleichen Informationsgehalt besitzen. Die erfindungsgemäße laseroptische Anordnung nach Figur 1 kann in Verbindung mit der in Figur 2 dargestellten Systemsteuerung 15, 16 nach entsprechender Programmierung auch zur Kontrolle und Steuerung von Dispergier- und Flockungsanlagen eingesetzt werden.

**Patentansprüche**

1. Laseroptische Anordnung zur Messung des Dispergiergrades eines strömenden Zweiphasensystems, welches Partikel und/oder Partikelverbände enthält, bestehend aus einer Hüllstromküvette (3), die am Meßort (5) zwischen einer Laserlichtquelle (6) und einem Photodetektor (9) angeordnet ist, so daß die zwischen der Laserlichtquelle (6) und dem Photodetektor (9) von den Partikeln und/oder Partikelverbänden verursachten optischen Signale in elektrische Signale umgesetzt werden, und aus einer mit dem Photodetektor (9) verbundenen Einrichtung (10) zur einem Dispergiergrad zuordenbaren, integrierten Effektivwertmessung der elektrischen Signale, dadurch gekennzeichnet, daß zur Fühung des Lichtes zwischen der Laserlichtquelle (6) und dem Meßort (5) eine einzelne Lichtleitfaser (7), und zwischen dem Meßort (5) und dem Photodetektor (9) ein Lichtleitfaserbündel (8) vorgesehen ist.

2. Laseroptische Anordnung nach Anspruch 1, dadurch gekennzeichnet, daß der Photodetektor (9) in einer Klemmschaltung betrieben wird, deren Gleichspannungs/Stromanteil als Bezugswert zur Normierung der Spannungs/Stromfluktuation verwendet wird.

3. Laseroptische Anordnung nach Anspruch 1 und 2, dadurch gekennzeichnet, daß als Laser (6) ein integrierter Halbleiterlaser verwendet wird.

4. Laseroptische Anordung nach Anspruch 1 bis 3, dadurch gekennzeichnet, daß als Photodetektor (9) ein integrierter Detektor, z.B. eine Silicium-Avalanche-Photodiode verwendet wird.

5. Laseroptische Anordnung nach Anspruch 1 bis 4, dadurch gekennzeichnet, daß ihr optischer und elektronischer Aufbau voll integriert ist.

**Claims**

1. A laser-optical arrangement for measuring the degree of dispersion of a flowing two-phase system of individual or aggregated particles, comprising an envelope-stream cell (3) arranged at the measuring point (5) between a laser light source (6) and a photodetector (9), so that the optical signals caused by the individual or aggregated particles between the laser light source (6) and photodetector (9) are converted into electrical signals, and, connected to the photodetector (9), a means (10) for integrated root-mean-square value measurement of the electrical signals for determining the degree of dispersion, wherein, to guide the light between the laser light source (6) and the measuring point (5), there is provided an individual light-transmitting fiber (7) and to guide the light between the measuring point (5) and the photodetector (9) there is provided a light-transmitting fiber bundle (8).

2. A laser-optical arrangement as claimed in claim 1, wherein the photodetector (9) is operated in a clamping circuit whose D.C. voltage/current value is used as the reference value for normalizing the voltage/current fluctuation.

3. A laser-optical arrangement as claimed in claims 1 and 2, wherein the laser (6) used is an integrated semiconductor laser.

4. A laser-optical arrangement as claimed in claim 1 or 2 or 3, wherein the photodetector (9) used is an integrated detector, eg. a silicon avalanche photodiode.

5. A laser-optical arrangement as claimed in claim 1 or 2 or 3 or 4, wherein its optical and electronic systems are fully integrated.

**Revendications**

1. Dispositif optique laser pour la mesure du degré de dispersion d'un système en écoulement à deux phases, qui contient des particules et/ou des formations de particules, constitué d'une cuvette à courant enveloppant (3) qui est disposée à l'enplacement de mesure (5) entre une source de lumière laser (6) et un photodétecteur (9), de sorte que les signaux optiques provoqués par les particules et/ou formations de particules, entre la source de lumière laser (6) et le photodétecteur (9), sont transformés en signaux électriques, et d'un moyen (10) relié au photodétecteur (9) pour la mesure de la valeur effective des signaux électriques, intégrée et rattachable à un degré de dispersion, caractérisé par le fait que, pour guider la lumière entre la source de lumière laser (6) et l'emplacement de mesure (5), est prévue une seule fibre optique (7) et qu'entre l'emplacement de mesure (5) et le photodétecteur (9) est prévu un faisceau de fibres optiques (8).

2. Dispositif optique laser selon la revendication 1, caractérisé par le fait que le photodétecteur (9) est exploité dans un circuit de verrouillage dont la portion tension continue/courant est utilisée comme valeur de référence pour la normalisation de la fluctuation tension/courant.

3. Dispositif optique laser selon les revendications 1 et 2 , caractérisé par le fait que l'on utilise comme laser (6) un laser à semi-conducteur intégré.

4. Dispositif optique laser selon la revendication 3, caractérisé par le fait que l'on utilise comme photodétecteur (9) un détecteur intégré, par exemple une photodiode silicium à avalanche.

5. Dispositif optique laser selon l'une des revendications 1 à 4, caractérisé par le fait que sa structure optique et électronique est totalement intégrée.

EP 0 157 310 B1

FIG.1

FIG.2

FIG.3

FIG.4